# EUROPEAN PATENT SPECIFICATION

(11) **EP 3 701 521 B1**
(45) Date of publication and mention of the grant of the patent: **27.03.2024**
(21) Application number: 18886817.8
(22) Date of filing: 06.12.2018
(51) Int. Cl.: G10L 15/22, G10L 15/18, G10L 15/00

(54) **VOICE RECOGNITION APPARATUS AND OPERATION METHOD THEREOF CROSS-REFERENCE TO RELATED APPLICATION**
VORRICHTUNG ZUR SPRACHERKENNUNG UND BETRIEBSVERFAHREN DAFÜR
APPAREIL DE RECONNAISSANCE VOCALE ET SON PROCÉDÉ DE FONCTIONNEMENT

(30) Priority: 07.12.2017 KR 20170167775
(43) Date of publication of application: 02.09.2020
(73) Proprietor: Samsung Electronics Co., Ltd., Suwon-si, Gyeonggi-do 16677 (KR)
(72) Inventor: BACK, Seohyun, Suwon-Si Gyeonggi-do 16677 (KR); HONG, Doohwa, Suwon-Si Gyeonggi-do 16677 (KR); RYU, Jongyoub, Suwon-Si Gyeonggi-do 16677 (KR); HONG, Jiyeon, Suwon-Si Gyeonggi-do 16677 (KR); KIM, Eunkyoung, Suwon-Si Gyeonggi-do 16677 (KR); CHOI, Sungja, Suwon-Si Gyeonggi-do 16677 (KR); LEE, Jaewon, Suwon-Si Gyeonggi-do 16677 (KR); INDURTHI, Sathish, Suwon-Si Gyeonggi-do 16677 (KR)
(74) Representative: Gulde & Partner
(86) International application number: PCT/KR2018/015428
(87) International publication number: WO 2019/112342

(56) References cited:
- WO-A1-2017/112813
- KR-A- 20130 103 205
- US-A1- 2010 286 985
- US-A1- 2016 132 291
- US-A1- 2016 134 581
- US-A1- 2016 336 010
- US-A1- 2017 286 049
- US-A1- 2017 286 049

## Description

### [Technical Field]

The disclosure relates to a voice recognition apparatus and an operation method thereof, and, for example , to a voice recognition method and apparatus for analyzing a user input based on content being executed and generating and outputting an answer.

The disclosure also relates to an artificial intelligence (AI) system for simulating functions such as recognition and determination using a machine learning algorithm such as deep learning and an application thereof.

### [Background Art]

Artificial intelligence (AI) systems are computer systems with intelligence at the human level. Unlike existing rule-based smart systems, AI systems are capable of self-learning, making determinations, and getting smart. As the use of AI systems improves more accurately the recognition rate and understanding of a user's taste, existing rule-based smart systems have been being gradually replaced by deep learning-based AI systems.

AI technology includes machine learning (deep learning) and element technologies using the machine learning.

Machine learning may refer to an algorithm technology of self-classifying/learning features of pieces of input data. Element technologies may refer to technologies of simulating functions such as recognition and determination of the human brain using a machine learning algorithm such as deep learning and include linguistic understanding, visual understanding, inference/prediction, knowledge expression, movement control, and the like.

Various fields in which the AI technology is applied are as follows. The linguistic understanding is a technique of recognizing and applying/processing human languages/characters and includes natural language processing, machine translation, conversation system, question and answer, voice recognition/synthesis, and the like. The visual understanding is a technique of recognizing and processing an object like a human sense of sight and includes object recognition, object tracking, image search, human recognition, scene understanding, space understanding, image enhancement, and the like. The inference/prediction is a technique of determining information to perform logical inference and prediction and includes knowledge/probability-based inference, optimization prediction, preference-based planning, recommendation, and the like. The knowledge expression is a technique of automatically processing experience information of a human being into knowledge data and includes knowledge construction (data creation/classification), knowledge management (data utilization), and the like. The movement control is a technique of controlling autonomous driving of a vehicle and a motion of a robot and includes motion control (navigation, collision, and driving), operation control (behavior control), and the like.

Recently, together with the development of electronic devices, such as a smartphone, for performing a combination of various functions, electronic devices having a voice recognition function to improve maneuverability have been launched. A voice recognition function allows a user of an electronic device to easily control a device through voice without operating a separate but t on or touching a touch module. Examples of such electronic devices are e.g. known from the international patent application WO 2017/112813, "MULTI-LINGUAL VIRTUAL PERSONAL ASSISTANT", by Wang Weng et al., 29. June 2017.

For the voice recognition function, various AI technologies may be used. Through linguistic understanding, the content of a user's utterance may be accurately recognized, and the user's intention included in the utterance content may be detected. In addition, through visual understanding, content used by the user may be understood, and through the inference/prediction, an appropriate answer according to the user's intention and the content being executed by the user may be generated. Furthermore, through movement control, the generated answer may be output in an appropriate form.

### [Disclosure]

### [Technical Solution]

The invention is defined by the independent claims. Preferred embodiments of the invention are matter of the dependent claims.

### [Advantageous Effects]

A voice recognition apparatus for analyzing a user input based on content and generating and outputting an answer and an operation method thereof are provided.

### [Description of Drawings]

In the following, the term "embodiment", as used throughout the description, is to be interpreted as referring to an illustrative example falling outside the subject-matter for which protection is sought, unless explicitly stated otherwise.

The above and other aspects, features, and advantages of certain embodiments of the present disclosure will be more apparent from the following description, taken in conjunction with the accompanying drawings, in which:
FIG. 1 is a diagram illustrating a voice recognition method according to an embodiment;
FIG. 2 is a block diagram illustrating an example voice recognition method according to an embodiment;
FIG. 3 is a flowchart illustrating an operation method of a voice recognition apparatus, according to an embodiment;
FIGS. 4, 5 and 6 are diagrams illustrating a voice recognition system according to an embodiment;
FIG. 7 is a block diagram illustrating a method used by the voice recognition apparatus to acquire content information, according to an embodiment;
FIG. 8 is a block diagram illustrating a method used by the voice recognition apparatus to recognize a user input, according to an embodiment;
FIG. 9 is a block diagram illustrating a method used by the voice recognition apparatus to acquire context information, according to an embodiment;
FIG. 10 is a block diagram illustrating a method used by the voice recognition apparatus to generate an answer, according to an embodiment;
FIG. 11 is a flowchart illustrating a method used by the voice recognition apparatus to determine relevance of an answer, according to an embodiment;
FIG. 12 is a block diagram illustrating a method used by the voice recognition apparatus to determine an output form of an answer, according to an embodiment;
FIG. 13 is a block diagram illustrating the voice recognition apparatus according to an embodiment;
FIG. 14 is a block diagram illustrating the voice recognition apparatus according to an embodiment;
FIG. 15 is a diagram illustrating an example of outputting an answer that varies according to content being executed;
FIG. 16 is a diagram illustrating an example wherein the voice recognition apparatus outputs an answer that varies according to context information;
FIG. 17 is a diagram illustrating another example of outputting an answer that varies according to content being executed;
FIG. 18 is a diagram illustrating an example of determining relevance of an answer;
FIG. 19 is a diagram illustrating an example form of an answer output according to an embodiment; and
FIG. 20 is a diagram illustrating another example wherein the voice recognition apparatus outputs an answer that varies according to context information according to an embodiment.

### [Best Mode]

A voice recognition apparatus for analyzing a user input based on content and generating and outputting an answer and an operation method thereof are provided.

Additional aspects will be set forth in part in the description which follows and, in part, will be apparent from the description.

In accordance with an aspect of the disclosure, an operation method of a voice recognition apparatus includes: receiving an audio signal and performing voice recognition; acquiring content information of content being executed; analyzing a user input based on the content information from a voice recognized by performing the voice recognition; generating an answer based on the analyzed user input and the content information; and outputting the answer.

In accordance with another aspect of the disclosure, a voice recognition apparatus includes: a receiver comprising receiving circuitry configured to receive an audio signal; a processor configured to perform voice recognition on the audio signal, to acquire content information of content being executed, to analyze a user input based on the content information from a voice recognized by performing the voice recognition, and to generate an answer based on the analyzed user input and the content information; and an output unit comprising output circuitry configured to output the answer.

In accordance with another aspect of the disclosure, a non-transitory computer-readable recording medium having recorded thereon a program including instructions which, when executed by a processor, causes an apparatus to perform operations including: receiving an audio signal and performing voice recognition; acquiring content information of content being executed; analyzing a user input based on the content information from a voice recognized by performing the voice recognition; generating an answer based on the analyzed user input and the content information; and outputting the answer.

### [Mode for Invention]

Reference will now be made in greater detail to example embodiments, examples of which are illustrated in the accompanying drawings. In the drawings, parts irrelevant to the description may be omitted to clearly describe the example embodiments, and like reference numerals denote like elements throughout the disclosure. In this regard, the present example embodiments may have different forms and should not be understood as being limited to the descriptions set forth herein. Accordingly, the example embodiments are merely described below, by referring to the figures, to explain various aspects. As used herein, the term "and/or" includes any and all combinations of one or more of the associated listed items. Expressions such as "at least one of," when preceding a list of elements, modify the entire list of elements and do not modify the individual elements of the list.

Some embodiments of the present disclosure can be represented with functional blocks and various processing steps. Some or all of these functional blocks can be implemented by various numbers of hardware and/or software configurations for executing specific functions. For example, the functional blocks of the present disclosure can be implemented by one or more microprocessors or by circuit configurations for certain functions. In addition, for example, the functional blocks of the present disclosure can be implemented by various programming or scripting languages. Functional blocks can be implemented with algorithms executed in one or more processors. In addition, the present disclosure may adopt the related art for electronic environment setup, signal processing, and/or data processing.

In addition, connection lines or connection members between components shown in the drawings illustrate functional connections and/or physical or circuit connections. In an actual apparatus, connections between components can be represented by replaceable or additional various functional connections, physical connections, or circuit connections.

In addition, terms such as "... unit", "... module", or the like, may refer to units that perform at least one function or operation, and the units may be implemented as hardware or software or as a combination of hardware and software. "Unit" or "module" may be implemented by a program stored in an addressable storage medium and executable by a processor.

For example, a "unit" or "module" may be implemented by components, such as software components, object-oriented software components, class components, and task components, processes, functions, attributes, procedures, subroutines, segments of program code, drivers, firmware, microcode, circuits, data, a database, data structures, tables, arrays, and/or variables, or the like.

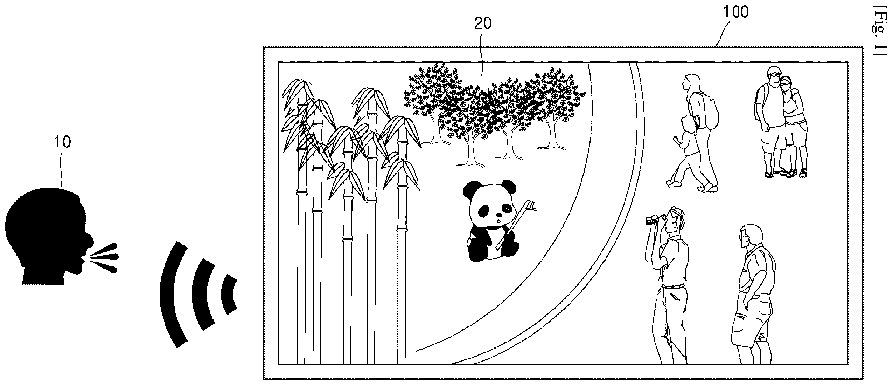

FIG. 1 is a diagram illustrating a voice recognition method according to an embodiment.

Referring to FIG. 1, a voice recognition apparatus 100 according to an embodiment may receive an audio signal including a voice signal uttered by a user 10 and perform voice recognition on the voice signal included in the received audio signal. Thereafter, the voice recognition apparatus 100 may understand a user input included in the voice signal and generate and output an answer in response to the user input. Through this process, the user 10 may control the voice recognition apparatus 100 using a voice signal.

Furthermore, the voice recognition apparatus 100 according to an embodiment may generate and output an answer suitable for an intention of the user 10 and a situation in which the voice recognition apparatus 100 operates, in addition to uniform analysis and understanding of a user input through a combination of voice recognition technology and artificial intelligence (AI) technology. For example, the voice recognition apparatus 100 according to an embodiment may be a deep learning-based AI system. According to an embodiment, the voice recognition apparatus 100 may recognize, apply, and process a human language and infer and predict a situation in which the voice recognition apparatus 100 operates using the AI technology.

In an embodiment, the voice recognition apparatus 100 may receive an audio signal in an idle state or receive an audio signal in a particular situation. For example, the voice recognition apparatus 100 may receive an audio signal while content is being executed. In this case, the voice recognition apparatus 100 may more accurately understand an intention according to utterance of the user 10 by analyzing a user input based on the content being executed in the voice recognition apparatus 100 rather than simply analyzing a user input from a voice recognized by performing voice recognition on an audio signal. Furthermore, even when an answer in response to a user input is generated and output, an appropriate answer may be output in an appropriate form by generating an answer based on the content being executed and a situation in which the voice recognition apparatus 100 operates.

Referring to FIG. 1, video content 20 in which a panda appears is being executed in the voice recognition apparatus 100. In this case, the voice recognition apparatus 100 may relatively accurately understand an intention of the user 10 by analyzing a user input based on the video content 20 being executed. For example, when the user 10 wants to know where the panda appearing in the video content 20 lives, the user 10 may ask "where does that panda live?" In this case, in the case of an existing voice recognition apparatus that receives an audio signal and performs voice recognition on the audio signal, the existing voice recognition apparatus cannot detect which panda is "that panda" indicated by a user, and thus, the existing voice recognition apparatus does not accurately understand an intention of the user. On the other hand, the voice recognition apparatus 100 according to an embodiment may understand that the user 10 asks 'where does the panda appearing in the video content 20 being executed live?', by analyzing a user input based on the video content 20 being executed.

In addition, the voice recognition apparatus 100 may generate an appropriate answer in response to a user input based on the video content 20 being executed. For example, the voice recognition apparatus 100 may infer that 'the panda appearing in the video content 20 being executed' lives in "Y zoo", based on the video content 20 being executed.

FIG. 1 illustrates the voice recognition apparatus 100 for receiving an audio signal, understanding a user input included in the received audio signal, and generating and outputting an answer in response to the user input, however, the voice recognition apparatus 100 is not limited thereto and may also receive various input signals such as a gesture, a character, and/or a video, or the like, understand a user input included in a corresponding signal, and generate and output an answer in response to the user input. For example, an electronic device including the voice recognition apparatus 100 may receive a signal such as a gesture, a character, and/or a video, or the like, from a user through various sensors and/or a user interface, understand a user input included in the received signal, and generate and output an answer in response to the user input.

Furthermore, the voice recognition apparatus 100 may output an answer of an appropriate form in consideration of a situation in which the voice recognition apparatus 100 operates, the video content being executed, and the like. For example, the voice recognition apparatus 100 may output an answer without interrupting the video content watched by the user 10, based on a situation in which the voice recognition apparatus 100 operates. A method of outputting an answer will be described in greater detail below.

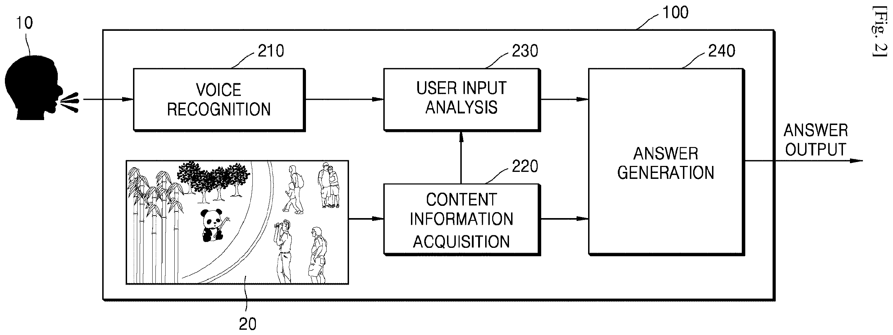

FIG. 2 is a block diagram illustrating a detailed voice recognition method according to an embodiment according to the present invention.

The voice recognition method illustrated in FIG. 2 may include the voice recognition method performed with reference to FIG. 1. In addition, hereinafter, as an example, a case where the voice recognition apparatus 100 is executing the video content 20 in which a panda appears, like FIG. 1, is described.

Referring to FIG. 2, the voice recognition apparatus 100 according to an embodiment according to the present invention receives an audio signal including a voice of the user 10 while executing the video content 20 in which a panda appears. For example, when the user 10 asks "where does that panda live?", the voice recognition apparatus 100 receives an audio signal including a corresponding voice.

According to an embodiment of the present invention, the voice recognition apparatus 100 may perform voice recognition 210 on the received audio signal. The voice recognition apparatus 100 may receive a user input by performing the voice recognition 210 on the received audio signal. For example, when the user 10 asks "where does that panda live?", the voice recognition apparatus 100 may understand the meaning of the sentence "where does that panda live?" as it is and receive the meaning of the sentence as a user input. The voice recognition 210 may, for example, be a process of uniformly analyzing and understanding a voice signal of the user 10.

In this case, the voice recognition apparatus 100 may recognize, apply, and process a language of a speaker, which is included in an audio signal, using AI technology. In an illustrative example not forming part of the invention, the voice recognition apparatus 100 may increase accuracy of the voice recognition 210 through learning (e.g., deep learning) of personal characteristics of the user 10, for example, intonation, linguistic habits, frequently using words and expressions, and the like, or linguistic understanding of a voice signal, for example, natural language processing and the like.

According to an embodiment forming part of the invention, the voice recognition apparatus 100 may acquire via content information acquisition 220 content information of content being executed, e.g., the video content 20 in which the panda appears. The content information may include story information and execution information of the content being executed. The story information of the content may include information regarding the content itself, such as a synopsis of the content, a state of an object included in the content, a relationship between objects, and the like. In addition, the execution information of the content may include information indicating an execution state of the content, such as a name of the content and a progress of the content. For example, the voice recognition apparatus 100 may acquire information regarding a synopsis, animals and plants in the content, a relationship between a human being and the animals and plants, a name of the video content 20, a total play time, a current progress, and the like with respect to the content being executed.

In this case, the voice recognition apparatus 100 may acquire via the content information acquisition 220 wide and deep content information using AI technology. For example, the voice recognition apparatus 100 may increase a degree of understanding with respect to a scene of the content being executed, through visual understanding with respect to the content.

In addition, the content information acquisition 220 may be performed along with the voice recognition 210 on the audio signal in parallel or sequentially. When the content information acquisition 220 and the voice recognition 210 are performed sequentially, the voice recognition 210 or the content information acquisition 220 may be first performed. In addition, the content information acquisition 220 may be performed continuously when the content is being executed, regardless of other processes. According to an illustrative example, the voice recognition apparatus 100 may acquire the content information by analyzing the content being executed or acquire information related to the content being executed from the outside, e.g., a server, a social network service (SNS), a database, or the like.

According to an embodiment forming part of the present invention, the voice recognition apparatus 100 may analyze via a user input analysis 230 a user input based on a voice recognition result and the acquired content information. Herein, the user input analysis 230 is provided to more accurately understand an utterance intention of the user 10 than the uniform analysis and understanding of the voice signal of the user 10 in the voice recognition 210. For example, the meaning of the sentence "where does that panda live?" is understood as it is through the voice recognition 210, whereas it may be understood based on the acquired content information through the user input analysis 230 that the user 10 asks 'where does the panda appearing in the video content 20 being executed live?'.

The voice recognition apparatus 100 may more accurately understand a user input using AI technology than a case where the AI technology is not used. For example, the voice recognition apparatus 100 may relatively accurately understand a user input by logically inferring and predicting an intention of the user 10 based on the content information.

According to an embodiment forming part of the presently claimed invention, the voice recognition apparatus 100 may generate via answer generation 240 an answer based on the acquired content information in response to the recognized user input. The voice recognition apparatus 100 may generate an appropriate answer desired by the user 10, based on the acquired content information. In this case, the voice recognition apparatus 100 may take into account not only the content information but also context information of the voice recognition apparatus 100. The context information of the voice recognition apparatus 100 may include information related to a location of the voice recognition apparatus 100, a motion, a peripheral environment, whether the voice recognition apparatus 100 is connected to another electronic device, the characteristics of a user who uses the voice recognition apparatus 100, and the like.

In addition, the voice recognition apparatus 100 may use various methods for the answer generation 240. For example, the voice recognition apparatus 100 may determine a type of the content through the content information, generate an answer through a movie analysis scheme such as plot analysis, character analysis, and scenario analysis when the content is movie, and generate an answer through a music analysis scheme such as a music information retrieval system, chord analysis, and tonality analysis when the content is music. Since an answer generated through this process is generated by understanding a user input really intended by the user 10, the answer has a high (e.g., greater) possibility of being an answer desired by the user 10. For example, the voice recognition apparatus 100 may acquire, through the content information, information indicating that the content being executed is a documentary related to the life of a panda, detect, from a database, that a scene being viewed by the user 10 was taken at the Y zoo, and generate an answer "the panda lives in the Y zoo."

In this case, the voice recognition apparatus 100 may generate a best answer using AI technology. For example, the voice recognition apparatus 100 may generate an answer closest to an answer desired by the user 10 or determine relevance of the answer, using a database through knowledge management. Herein, the database may be a knowledge-based database.

According to an embodiment forming part of the present invention, the voice recognition apparatus 100 may output the generated answer. In this case, the voice recognition apparatus 100 may output an answer of an appropriate form in consideration of the context information of the voice recognition apparatus 100 and the like. For example, the voice recognition apparatus 100 may output the answer as subtitles instead of voice when a commentary on the life of a panda is being output in the content being executed or the user 10 is in an environment in which the answer cannot be properly heard since the area around the voice recognition apparatus 100 is noisy, at a time point where the answer is output. In this case, the voice recognition apparatus 100 may determine a relatively appropriate output form of the answer using AI technology.

Hereinafter, a voice recognition method and a voice recognition apparatus according to various example embodiments of the present disclosure will be described with reference to the accompanying drawings. As described above, the voice recognition method and the voice recognition apparatus according to embodiments of the present disclosure may perform voice recognition based on content being executed and provide, in an appropriate form, an appropriate answer according to the voice recognition.

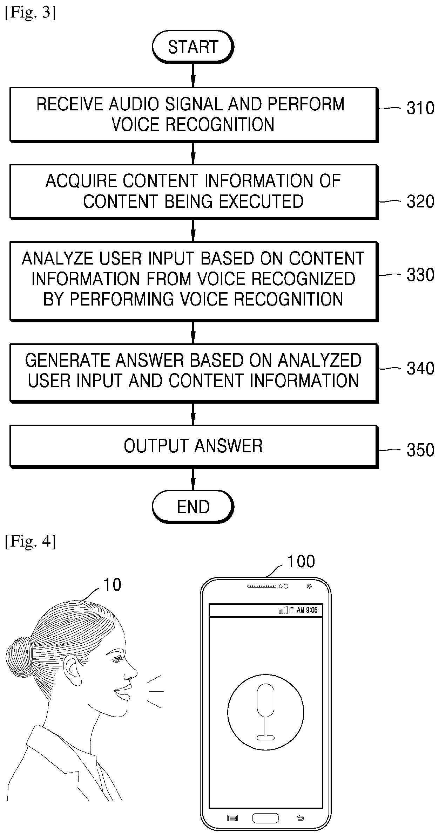

FIG. 3 is a flowchart illustrating an operation method of a voice recognition apparatus, according to an embodiment forming part of the present invention.

Referring to FIG. 3, in operation 310, the voice recognition apparatus 100 receives an audio signal and performs voice recognition on the received audio signal.

In operation 320, the voice recognition apparatus 100 acquires content information of content being executed. The content information may include story information and execution information of the content being executed.

Although FIG. 3 illustrates that operation 310 is performed and then operation 320 is performed, operations 310 and 320 may be performed sequentially or in parallel, and when operations 310 and 320 are performed sequentially, operation 320 may be performed and then operation 310 may be performed.

Furthermore, although not shown in FIG. 3, the voice recognition apparatus 100 may further perform an operation of acquiring context information related to a situation in which the voice recognition apparatus 100 operates.

In operation 330, the voice recognition apparatus 100 analyzes a user input based on the content information from a voice recognized by performing the voice recognition. According to an embodiment forming part of the present invention, the voice recognition apparatus 100 may perform natural language understanding with respect to the recognized voice based on the content information. In greater detail, the natural language understanding with respect to the recognized voice may be performed, and then the natural language understanding with respect to the recognized voice may be corrected based on the content information. In addition, the voice recognition apparatus 100 may analyze the user input based on the context information.

In operation 340, the voice recognition apparatus 100 generates an answer based on the analyzed user input and the content information. According to an embodiment forming part of the present invention, the voice recognition apparatus 100 may determine relevance of the answer, and correct the answer when it is determined that the answer is not relevant. In this case, universal relevance, user relevance, and the like of the answer may be determined. Alternatively, the voice recognition apparatus 100 may generate an answer based on the context information.

In operation 350, the voice recognition apparatus 100 outputs the answer. According to an embodiment forming part of the present invention, the voice recognition apparatus 100 may determine an output form of the answer based on the content information and the context information.

According to an embodiment forming part of the present invention, the voice recognition apparatus 100 may perform the voice recognition based on the content being executed and provide, in an appropriate form, an appropriate answer according to the voice recognition.

FIGS. 4, 5 and 6 are diagrams illustrating a voice recognition system according to an illustrative embodiment not forming part of the invention.

As illustrated in FIG. 4, the voice recognition system according to an embodiment may include the voice recognition apparatus 100. For example, the voice recognition apparatus 100 may be a mobile computing device or a non-mobile computing device, such as, for example, and without limitation, a smartphone, a tablet personal computer (PC), a PC, a smart TV, a personal digital assistant (PDA), a laptop computer, a media player, a micro server, a global positioning system (GPS) device, a wearable device, an electronic book terminal, a digital broadcasting terminal, a navigation machine, a kiosk, an MP3 player, a digital camera, an electronic control device, a central information display (CID) in a vehicle, or the like, but is not limited thereto. The voice recognition system may not be an independent device but be included as one component in another device. For example, the voice recognition system may be included in a smartphone or included in an electronic control device or a CID included in a vehicle.

The voice recognition apparatus 100 according to an embodiment may receive an audio signal including a voice signal uttered by the user 10 and perform voice recognition on the voice signal included in the received audio signal. Thereafter, the voice recognition apparatus 100 may understand a user input from the recognized voice and generate and output an answer in response to the user input.

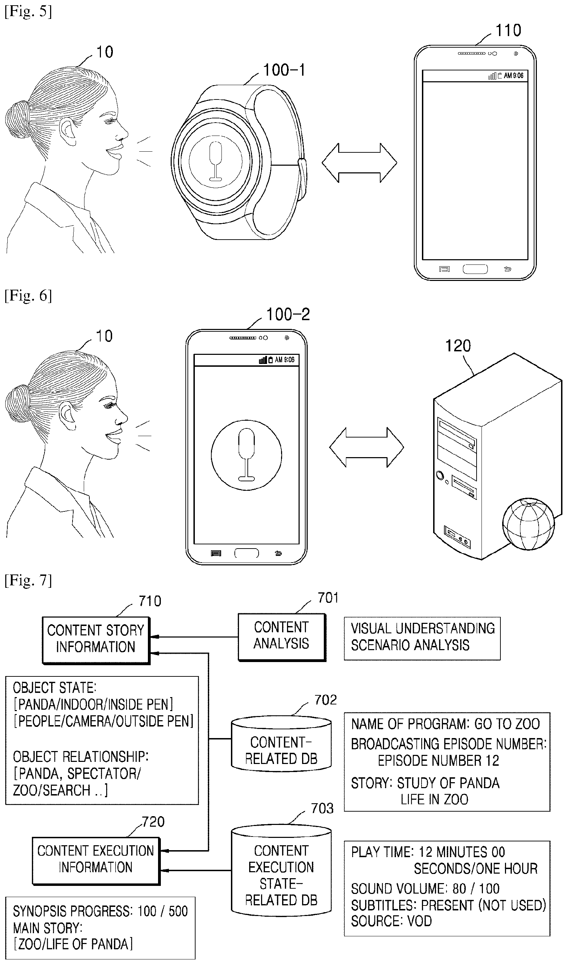

Alternatively, as illustrated in FIG. 5, the voice recognition system according to an embodiment may include a wearable device 100-1 and an electronic device 110 connected to (e.g., coupled with) the wearable device 100-1. The wearable device 100-1 and the electronic device 110 may be connected in a wired or wireless manner.

For example, the wearable device 100-1 may be a mobile computing device or a non-mobile computing device having, for example, and without limitation, a shape of a watch, a band, glasses, headphones, earphones, or the like, but is not limited thereto. In addition, the electronic device 110 connected to the wearable device 100-1 may be a mobile computing device or a non-mobile computing device, such as, for example, and without limitation, a smartphone, a tablet PC, a PC, a smart TV, a PDA, a laptop computer, a media player, a micro server, a GPS device, a wearable device, an electronic book terminal, a digital broadcasting terminal, a navigation machine, a kiosk, an MP3 player, a digital camera, a CID or an electronic control device in a vehicle, or the like, but is not limited thereto.

The wearable device 100-1 according to an embodiment may receive an audio signal including a voice signal uttered by the user 10 and transmit the received audio signal to the electronic device 110. Alternatively, the wearable device 100-1 may receive an audio signal including a voice signal uttered by the user 10 and transmit, to the electronic device 110, a voice signal detected from the received audio signal. Alternatively, the wearable device 100-1 may receive an audio signal including a voice signal uttered by the user 10 and transmit, to the electronic device 110, a feature of the voice signal detected from the received audio signal. It will be understood that the foregoing alternatives are merely examples, and that the present disclosure is not limited thereto.

The electronic device 110 may perform voice recognition based on a signal received from the wearable device 100-1. For example, the electronic device 110 may perform voice recognition on a voice signal detected from an audio signal input from the wearable device 100-1. The electronic device 110 may output an answer according to the voice recognition or transmit a voice recognition result to the wearable device 100-1 such that the wearable device 100-1 outputs the answer according to the voice recognition.

Alternatively, as illustrated in FIG. 6, the voice recognition system according to an embodiment may include a voice recognition apparatus 100-2 and a server 120 connected to (e.g., in operative communication with) the voice recognition apparatus 100-2. The voice recognition apparatus 100-2 and the server 120 may be connected to each other in a wired or wireless manner.

The voice recognition apparatus 100-2 may transmit an audio signal including a voice signal uttered by the user 10, the voice signal detected from the audio signal, or a feature of the voice signal to the server 120, and the server 120 may receive the audio signal, the voice signal, or the feature and perform voice recognition. In addition, the server 120 may transmit a voice recognition result to the voice recognition apparatus 100-2 such that the voice recognition apparatus 100-2 outputs an answer according to the voice recognition.

The voice recognition system according to an embodiment may be a deep learning-based AI system. Using AI technology, the voice recognition system according to an embodiment may recognize and process a human language by inferring and predicting a situation in which a voice recognition apparatus operates.

Hereinafter, various example operation methods of a voice recognition apparatus, according to embodiments, will be described in greater detail with reference to FIGS. 7 to 12. Herein, like in the case of FIG. 1, a case where the video content 20, in which a panda appears, is being executed is described as an example.

FIG. 7 is a block diagram illustrating a method used by the voice recognition apparatus 100 to acquire content information, according to an embodiment.

As described above, the content information may include content story information 710 related to a story of content being executed and content execution information 720 related to content execution. Referring to FIG. 7, the voice recognition apparatus 100 according to an embodiment may acquire the content information using analysis 701 of the content being executed and databases 702 and 703. For example, the databases 702 and 703 may include a content-related database 702 including data on a story of content, a format of the content, and the like and a content execution state-related database 703 including data indicating a state of content being executed.

The content-related database 702 may, for example, be a knowledge-based database, and may be stored in the voice recognition apparatus 100 or stored in an external device such that the voice recognition apparatus 100 uses the content-related database 702 by accessing the external device through a communication interface (not shown). The content execution state-related database 703 is a database generated, stored, and managed according to execution of content, and thus, the content execution state-related database 703 may be stored in a device for executing the content or in another device connected to the device for executing the content. Therefore, when the voice recognition apparatus 100 executes content, the content execution state-related database 703 may be stored in the voice recognition apparatus 100 or in a storage device connected to the voice recognition apparatus 100.

The voice recognition apparatus 100 according to an embodiment may analyze 701 content being executed and acquire information related to the content being executed from the content-related database 702, thereby acquiring the content story information 710. Referring to FIG. 7, the voice recognition apparatus 100 may perform visual understanding with respect to the content being executed using AI technology, analyze the content being executed using a scenario analysis scheme, and understand a story of the content using metadata or the like of the content. For example, the voice recognition apparatus 100 may detect, through visual understanding, that a panda appears in the content and detect, through scenario analysis, that the content is related to the life of a panda in a zoo. In addition, the voice recognition apparatus 100 may acquire information indicating that a name of a program is 'go to zoo', a broadcasting episode number is 'episode 12', and a story of the episode is 'study of panda life in the zoo'.

As described above, the acquired content story information 710 may include information regarding the content itself, such as a synopsis of the content, a state of an object included in the content, and a relationship between objects. For example, referring to FIG. 7, according to the content being executed in the voice recognition apparatus 100, there appear a panda in an indoor pen and people carrying a camera outside the pen, and the people are spectators who are viewing the panda in a zoo.

The voice recognition apparatus 100 according to an embodiment may acquire the content execution information 720 from the content-related database 702 and the content execution state-related database 703. As described above, referring to FIG. 7, the voice recognition apparatus 100 may acquire, from the content-related database 702, information indicating that a name of a program being executed is 'go to zoo', a broadcasting episode number is 'episode 12', and a story of the episode is 'study of panda life in the zoo'. In addition, the voice recognition apparatus 100 may acquire, from the content execution state-related database 703, information indicating that a play time of the content being executed is one hour, 12 minutes of the play time have elapsed, a sound is output at 80/100, subtitles exist but are not used at present, and the content being executed is a video on demand (VOD).

As described above, the acquired content execution information 720 may include a synopsis progress, a main story, and the like. Referring to FIG. 7, according to the content being executed in the voice recognition apparatus 100, the synopsis progress is 100/500 in the total story, and the main story is related to the life of the panda in the zoo.

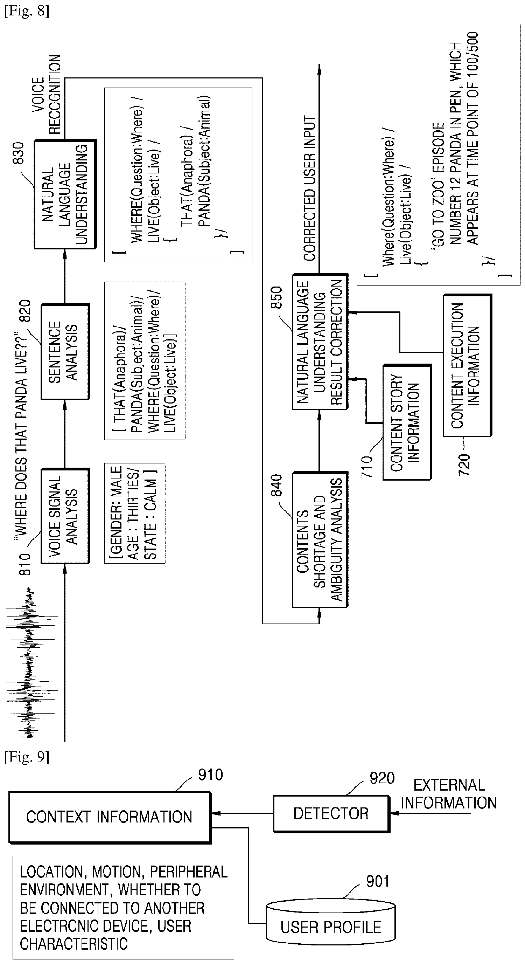

FIG. 8 is a block diagram illustrating a method used by the voice recognition apparatus 100 to recognize a user input, according to an embodiment.

The voice recognition apparatus 100 according to an embodiment receives an audio signal including a voice signal uttered by the user 10 and performs voice signal analysis 810 on the voice signal included in the received audio signal. For example, referring to FIG. 8, when the user 10 asks "where does that panda live?", the voice recognition apparatus 100 may extract only a voice signal of the user 10, "where does that panda live?", from the received audio signal. In this process, the voice recognition apparatus 100 may detect, through the voice signal analysis 810, that the user 10 is a male, an age of the user 10 is about thirties, and an emotional state of the user 10 is calm.

The voice recognition apparatus 100 according to an embodiment may perform sentence analysis 820 to perform natural language understanding 830 with respect to the voice signal. In a process of the sentence analysis 820, to perform the natural language understanding 830, sentence symbols are processed, and a sentence is segmented. Referring to FIG. 8, the voice signal of the user 10, " where does that panda live?", is segmented into [ (anaphora: that)/ (subject: animal: panda)/ (question: where)/ (object: live)]. Thereafter, the voice recognition apparatus 100 according to an embodiment may understand the sentence by performing the natural language understanding 830 with respect to the analyzed sentence.

The process of the sentence analysis 820 and the natural language understanding 830 illustrated in FIG. 8 is merely illustrative, and natural language understanding may be performed by a method other than the method shown in FIG. 8. In addition, the voice recognition apparatus 100 may recognize, apply, and process a language of a speaker, which is included in an audio signal, using AI technology. In more detail, the voice recognition apparatus 100 may increase accuracy of voice recognition through learning (deep learning) of personal characteristics of the user 10, for example, intonation, linguistic habits, frequently using words and expressions, and the like, or linguistic understanding of a voice signal, for example, natural language processing and the like.

According to an embodiment, the voice recognition apparatus 100 performs contents shortage and/or ambiguity analysis 840 with respect to a voice recognition result. This process is to determine whether the voice recognition apparatus 100 has accurately understood a user input through the voice recognition. As a result of analyzing the voice recognition result, when the contents contained in the voice signal are insufficient or ambiguous for the voice recognition apparatus 100 to accurately understand the user input, the voice recognition apparatus 100 may perform natural language understanding result correction 850 using content information. That is, the user input recognized through the voice recognition may be corrected.

In greater detail, as shown in FIG. 7, the voice recognition apparatus 100 may acquire content information including the content story information 710 and the content execution information 720 of the content being executed. The voice recognition apparatus 100 may relatively accurately understand an utterance intention of the user 10, e.g., a user input actually intended by the user 10, by supplementing or clearing, through the content information, the contents contained in the voice signal.

For example, referring to FIG. 8, the voice recognition apparatus 100 may understand, based on the content story information 710 and the content execution information 720 of the content being executed, that a question of the user 10, which is actually intended by the user 10, is asking where 'a panda in a pen, which appears at a time point of 100/500 in episode 12 of a program "go to a zoo"' lives. In addition, the voice recognition apparatus 100 may relatively accurately understand an intention of the user 10 using AI technology. For example, the voice recognition apparatus 100 may relatively accurately understand a user input by logically inferring and predicting the intention of the user 10 based on the content information.

FIG. 9 is a block diagram illustrating a method used by the voice recognition apparatus 100 to acquire context information, according to an embodiment.

The voice recognition apparatus 100 according to an embodiment may acquire context information 910 related to a situation in which the voice recognition apparatus 100 operates. Referring to FIG. 9, the voice recognition apparatus 100 according to an embodiment may acquire the context information 910 using a detector (e.g., including detection circuitry) 920 configured to detect external information, a user profile 901, and the like.

The voice recognition apparatus 100 may receive and detect various pieces of information for determining a situation in which the voice recognition apparatus 100 operates, using information detected by the detector 920. For example, the detector 920 may receive or detect a location of the voice recognition apparatus 100, information related to a motion, information on a user who uses the voice recognition apparatus 100, a peripheral environment of the voice recognition apparatus 100, and the like.

The user profile 901 may, for example, refer to the information on the user who uses the voice recognition apparatus 100 and may be stored in the voice recognition apparatus 100 or received from an external device through a communication interface (not shown). In addition, the voice recognition apparatus 100 may update the user profile 901 based on user information acquired through the detector 920.

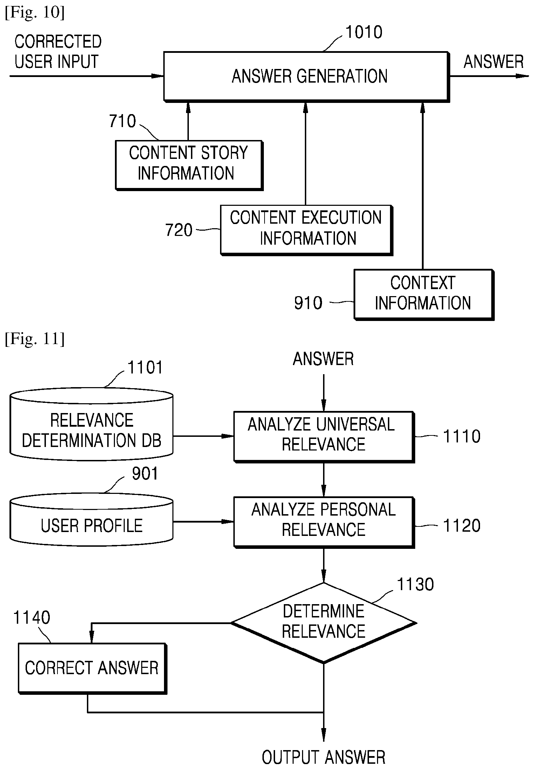

FIG. 10 is a block diagram illustrating a method used by the voice recognition apparatus 100 to generate an answer, according to an embodiment.

Referring to FIG. 10, the voice recognition apparatus 100 according to an embodiment may generate an answer using answer generation 1010 in response to a user command according to a recognized user input. Herein, the answer may include an operation of the voice recognition apparatus 100 according to the user input.

The voice recognition apparatus 100 may generate an answer based on content information including the content story information 710 and the content execution information 720 of content being executed and may also generate the answer based on the context information 910 of the voice recognition apparatus 100. In addition, the voice recognition apparatus 100 may use a database to generate the answer.

For example, to generate an answer to a question of a user, "where does that panda live?", the voice recognition apparatus 100 may acquire a name, an address, or the like of a zoo in which 'a panda in a pen, which appears at a time point of 100/500 in episode 12 of a program "go to zoo"' is raised. In addition, when a user asks a story of a drama being broadcast on a TV at present, the voice recognition apparatus 100 may generate an answer by acquiring, from content information or a database, only a story after a time point where the user viewed. The voice recognition apparatus 100 may generate an answer suitable for age limit for a teenager user using user characteristic information included in the context information 910, thereby generating a user-adaptive answer.

Furthermore, the voice recognition apparatus 100 may generate a best answer using AI technology. For example, the voice recognition apparatus 100 may generate an answer closest to an answer desired by the user, using a database through knowledge management.

FIG. 11 is a flowchart illustrating a method used by the voice recognition apparatus 100 to determine relevance of an answer, according to an embodiment.

The voice recognition apparatus 100 according to an embodiment may determine relevance of a generated answer, and may correct the answer when it is determined that the answer is not appropriate. Even though the answer itself is a right answer, when it is determined that outputting the answer is rather not helpful to a user, the answer may be corrected.

Referring to FIG. 11, in operation 1110, the voice recognition apparatus 100 may analyze universal relevance of a generated answer based on a relevance determination database 1101. The relevance determination database 1101 stores data related to criteria considered to be appropriate based on universal validity and may be learned and updated using AI technology. The relevance determination database 1101 may be stored in the voice recognition apparatus 100 or may be stored in an external device such that the voice recognition apparatus 100 uses the relevance determination database 1101 by accessing the external device through a communication interface (not shown).

For example, an answer to a question such as "method of stopping others?" is not universally valid from social and ethical points of view, and thus, it may be analyzed that the answer is not appropriate. In addition, when an answer to a question of a user who is watching a movie may be a spoiler since the answer contains information regarding a following synopsis, outputting the answer may rather interrupt the user from watching the movie, and thus, it may be analyzed that the answer is not appropriate from a general point of view.

In addition, according to an embodiment, when universal relevance of an answer is analyzed, the voice recognition apparatus 100 may score a corresponding answer according to preset criteria. The score of the corresponding answer may be used to determine relevance in operation 1130.

In operation 1120, the voice recognition apparatus 100 may analyze personal relevance of the generated answer based on the user profile 901. As described above, the user profile 901 is information on a user who uses the voice recognition apparatus 100 and may include data related to personal criteria of the user. The user profile 901 may also be learned and updated using AI technology.

For example, in the example described above, it may be analyzed that the spoiler is not appropriate in a general point of view, but for a user who desires to watch movie after understanding a total synopsis, it does not matter that an answer includes a spoiler.

In addition, according to an embodiment, when personal relevance of an answer is analyzed, the voice recognition apparatus 100 may score a corresponding answer according to preset criteria. The score of the corresponding answer may be used to determine relevance in operation 1130.

Although FIG. 11 illustrates that the operation 1110 is performed first and then the operation 1120 is performed, the operations 1110 and 1120 may be performed sequentially or in parallel, and when the operations 1110 and 1120 are performed sequentially, the operation 1120 may be performed first and then the operation 1110 may be performed.

In operation 1130, the voice recognition apparatus 100 determines relevance of a generated answer based on analysis results of the previous operations. According to an embodiment, the voice recognition apparatus 100 may determine whether a corresponding answer is appropriate, according to scores of the scored answer in the universal relevance analysis and the personal relevance analysis. In this case, the voice recognition apparatus 100 may have a preset criterion, and a corresponding criterion may be score.

When it is determined that the generated answer is appropriate, the voice recognition apparatus 100 may output the generated answer, and when it is determined that the generated answer is not appropriate, the voice recognition apparatus 100 may proceed to operation 1140 to correct the answer and output the corrected answer. According to an embodiment, the voice recognition apparatus 100 may correct the answer in a way of satisfying the preset criterion, that is, a way of satisfying a set score.

In addition, when it is determined that the answer is not appropriate or, the answer is corrected, the voice recognition apparatus 100 may allow the user to select whether the generated answer is output as it is or the corrected answer is output, and output an answer according to the selection of the user.

The voice recognition apparatus 100 may generate a best answer using AI technology. For example, the voice recognition apparatus 100 may determine relevance of an answer using a database through knowledge management.

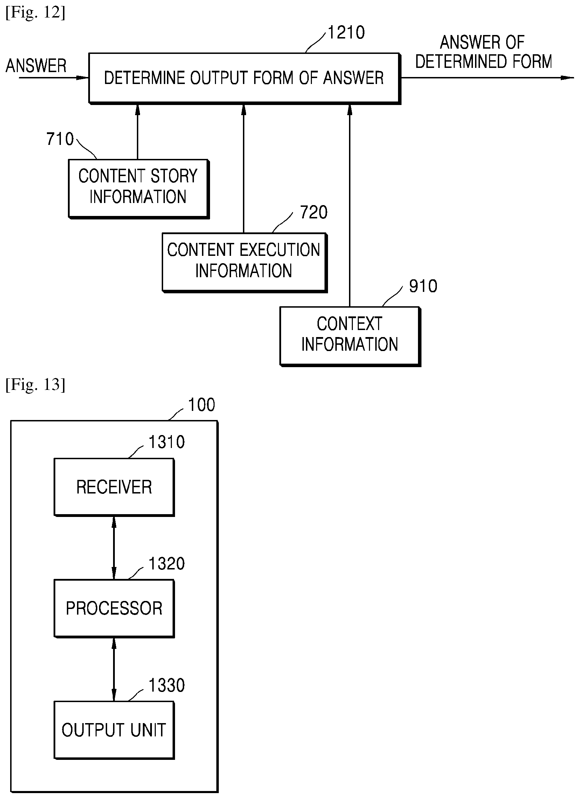

FIG. 12 is a block diagram illustrating a method used by the voice recognition apparatus 100 to determine an output form of an answer, according to an embodiment.

The voice recognition apparatus 100 according to an embodiment may determine an output form of an answer. In greater detail, the voice recognition apparatus 100 may determine an output form of an answer 1210 based on content information including the content story information 710 and the content execution information 720 of content being executed. In addition, the voice recognition apparatus 100 may determine an answer form based on the context information 910 of the voice recognition apparatus 100.

For example, when a generated answer is not appropriate to be output to the public at a public place since the generated answer includes violent or suggestive contents, the voice recognition apparatus 100 may determine an output form of the answer by outputting the answer through a voice only when a user uses earphones or outputting an image or a video with a reduced size when the answer is output as the image or video. In addition, the voice recognition apparatus 100 may output an answer as subtitles instead of voice when a commentary of a life of a panda is being output in the content being executed or the user is in an environment in which the answer cannot be properly heard since the periphery of the voice recognition apparatus 100 is noisy, at a time point where the answer is output.

The voice recognition apparatus 100 may determine an output form of an answer using AI technology. For example, the voice recognition apparatus 100 may recognize a situation in which the voice recognition apparatus 100 operates, from detected external information, and determine an appropriate output form according to the recognized situation.

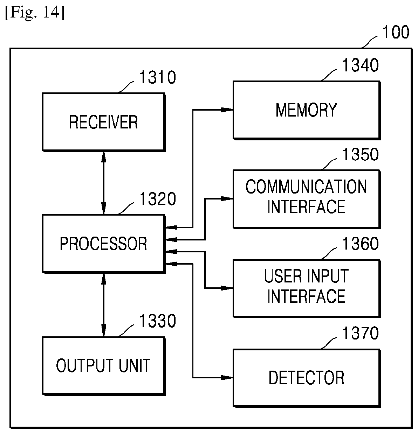

FIG. 13 is a block diagram illustrating the voice recognition apparatus 100 according to an embodiment, and FIG. 14 is a block diagram illustrating the voice recognition apparatus 100 according to an embodiment.

As illustrated in FIG. 13, the voice recognition apparatus 100 according to an embodiment may include a receiver (e.g., including receiving circuitry) 1310, a processor (e.g., including processing circuitry) 1320, and an output unit (e.g., including output circuitry) 1330. However, the voice recognition apparatus 100 may be implemented by more components than the components shown in FIG. 13. For example, as illustrated in FIG. 14, the voice recognition apparatus 100 according to an embodiment may further include at least one component among a memory 1340, a communication interface (e.g., including communication interface circuitry) 1350, a user input interface (e.g., including user input circuitry) 1360, and a detector (e.g., including detection circuitry) 1370.

The voice recognition apparatus 100 according to an embodiment may be included in at least one of, for example, and without limitation, a non-mobile computing device, a mobile computing device, an electronic control device in a vehicle, a server or connected to at least one of the non-mobile computing device, the mobile computing device, the electronic control device in a vehicle, and the server in a wired or wireless manner, or the like, but is not limited thereto.

The receiver 1310 according to an embodiment may include various receiving circuitry to receive an audio signal. For example, the receiver 1310 may directly receive an audio signal by converting an external sound into electrical acoustic data using a microphone. The receiver 1310 may receive an audio signal transmitted from an external device. Although FIG. 13 shows that the receiver 1310 is included in the voice recognition apparatus 100, according to another embodiment, the receiver 1310 may be included in a separate device and connected to the voice recognition apparatus 100 in a wired or wireless manner.

The processor 1320 according to an embodiment may include various processing circuitry and control a general operation of the voice recognition apparatus 100. For example, the processor 1320 may control the receiver 1310 and the output unit 1330. In addition, the processor 1320 may control an operation of the voice recognition apparatus 100 using AI technology.

The processor 1320 according to an embodiment may analyze a user command based on content being executed and provide an appropriate answer according to the analysis in an appropriate form. In greater detail, the processor 1320 may perform voice recognition on an audio signal, acquire content information of the content being executed, analyze a user input based on the content information from a voice recognized by performing the voice recognition, and generate an answer based on the analyzed user input and the content information. In addition, the processor 1320 may output the generated answer through the output unit 1330 in an appropriate form.

The content information may include, for example, and without limitation, story information and execution information of the content being executed. For example, the story information of the content may include information regarding the content itself, such as a synopsis of the content, a state of an object included in the content, and a relationship between objects. In addition, the execution information of the content may include information indicating an execution state of the content, such as a name of the content and a progress of the content. The processor 1320 may acquire the content information by analyzing and processing the content being executed or acquire the content information from an external device. Therefore, as illustrated in FIG. 14, the voice recognition apparatus 100 may further include a communication interface 1350.

The processor 1320 according to an embodiment may perform natural language understanding with respect to the recognized voice based on the content information. The processor 1320 may perform natural language understanding with respect to the recognized voice and correct the natural language understanding with respect to the recognized voice based on the content information.

The processor 1320 according to an embodiment may determine relevance of the answer and may correct the answer when it is determined that the answer is not appropriate. In this case, the processor 1320 may determine universal relevance and/or user relevance of the answer.

The processor 1320 according to an embodiment may control the detector 1370 to acquire context information related to a situation in which the voice recognition apparatus 100 operates and generate the answer based on the context information. The context information may include information related to a location of the voice recognition apparatus 100, a motion, a peripheral environment, whether the voice recognition apparatus 100 is connected to another electronic device, the characteristics of a user who uses the voice recognition apparatus 100, and the like. In addition, the processor 1320 may analyze the user input based on the context information.

The processor 1320 according to an embodiment may determine an output form of the answer based on the content information and/or the context information.

The processor 1320 according to an embodiment may be implemented by hardware and/or software configurations that execute certain functions. For example, the processor 1320 may include at least one of a content information acquirer (not shown) configured to acquire content information of content being executed, a voice recognizer (not shown) configured to perform voice recognition on an audio signal, a user command recognizer (not shown) configured to a user command included in the audio signal based on the content information, and an answer generator (not shown) configured to an answer in response to the user command based on the content information. Each of the foregoing functional elements may include various processing circuitry and/or program elements.

For example, the functions performed by the processor 1320 according to an embodiment may be implemented by at least one microprocessor or circuit configurations for corresponding functions. Some or all of the functions performed by the processor 1320 may be implemented by a software module configured using various programming languages or a script language to be executed by the processor 1320. Although FIGS. 13 and 14 show that the voice recognition apparatus 100 includes one processor 1320, the voice recognition apparatus 100 is not limited thereto and may include a plurality of processors.

The output unit 1330 according to an embodiment may include various output circuitry and output a result of performing the voice recognition on the audio signal. The output unit 1330 may inform the user of the result of performing the voice recognition or transmit the result of performing the voice recognition to an external device (e.g., a smartphone, a smart TV, a smart watch, a server, or the like).

In greater detail, the output unit 1330 according to an embodiment may output an answer corresponding to the result of performing the voice recognition. For example, the voice recognition apparatus 100 may output an answer to a question of the user, through the output unit 1330. In addition, the voice recognition apparatus 100 may determine a function of the voice recognition apparatus 100, which corresponds to the result of performing the voice recognition, and output, through the output unit 1330, a screen image for performing a corresponding function. Alternatively, the voice recognition apparatus 100 may transmit a keyword corresponding to the result of performing the voice recognition to an external server, receive information related to the transmitted keyword from the server, and output the received information on a screen through the output unit 1330.

The output unit 1330 according to an embodiment may output information received from the outside, processed by the processor 1320, or stored in the voice recognition apparatus 100, in at least one form of light, sound, image, and vibration. For example, the output unit 1330 may further include at least one of a display configured to output a text or an image, a sound output unit configured to output a sound, and a vibration motor configured to output vibrations.

As illustrated in FIG. 14, the voice recognition apparatus 100 according to an embodiment may further include at least one component among the memory 1340, the communication interface 1350, the user input interface 1360, and the detector 1370.

The memory 1340 according to an embodiment may include at least one type of storage medium among a flash memory type memory, a hard disk type memory, a multimedia card micro type memory, a card type memory (e.g., a secure digital (SD) memory, an extreme digital (XD) memory, or the like), random access memory (RAM), static RAM (SRAM), read-only memory (ROM), electrically erasable programmable ROM (EEPROM), programmable ROM (PROM), a magnetic memory, a magnetic disc, and an optical disc.

The user input interface 1360 according to an embodiment may include various user input interface circuitry and receive a user input for controlling the voice recognition apparatus 100. The user input interface 1360 may include a user input device including input circuitry comprising, for example, and without limitation, a touch panel configured to receive a touch of the user, a button configured to receive a push operation of the user, a wheel configured to receive a rotational operation of the user, a keyboard, a dome switch, and the like, but is not limited thereto.

The communication interface 1350 according to an embodiment may include various communication interface circuitry and communicate with an external electronic device or server through wired or wireless communication. The communication interface 1350 may acquire content information, context information of the voice recognition apparatus 100, and the like. For example, the communication interface 1350 may communicate with an external device having a database to acquire the content information, context information of the voice recognition apparatus 100, and the like.

The communication interface 1350 according to an embodiment may include, for example, and without limitation, a near-field communication module, a wired communication module, a mobile communication module, a broadcast reception module, and the like.

The detector 1370 may include various detecting circuitry, such as, for example, and without limitation, one or more sensors and receive and detect various pieces of information for determining a situation in which the voice recognition apparatus 100 operates. For example, the detector 1370 may receive or detect a location of the voice recognition apparatus 100, information related to a motion, information on the user who uses the voice recognition apparatus 100, a peripheral environment of the voice recognition apparatus 100, and the like.

For example, the detector 1370 may include, for example, and without limitation, an illumination sensor, a biosensor, a tilt sensor, a position sensor, a proximity sensor, a geomagnetic sensor, a gyroscope sensor, a temperature/humidity sensor, an infrared sensor, and/or a velocity/acceleration sensor, or the like, taken at least one or in combination.

According to an embodiment, voice recognition may be performed based on content being executed, and an appropriate answer according to the voice recognition may be provided in an appropriate form.

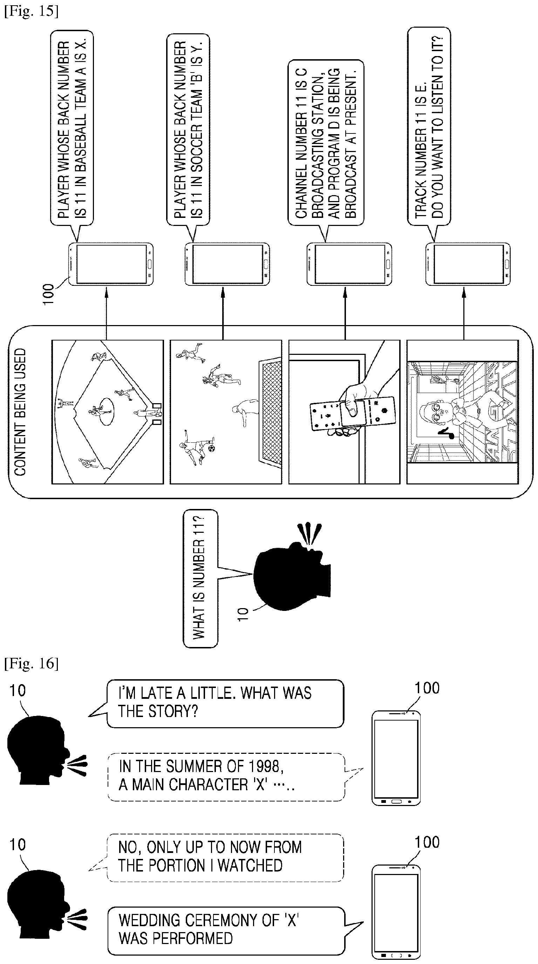

The voice recognition method or the voice recognition apparatus 100 according to embodiments has been described. Hereinafter, examples of using the voice recognition method or the voice recognition apparatus 100 according to embodiments will be described with reference to FIGS. 15 to 20.

FIG. 15 is a diagram illustrating an example of outputting an answer that varies according to content being executed.

As illustrated in FIG. 15, the voice recognition apparatus 100 may output an answer that varies according to content being executed, with respect to a voice signal of the user 10. Referring to FIG. 15, for example, when the user 10 asks a question "what is 11?", the voice recognition apparatus 100 may analyze and understand the meaning of the question, which varies according to content being executed.

When the user 10 is watching a baseball game, the voice recognition apparatus 100 may acquire information on a baseball player whose back number is 11 and output an answer "the player whose back number is 11 in a baseball team A is X". When the user 10 is watching a soccer game, the voice recognition apparatus 100 may acquire information on a soccer player whose back number is 11 and output an answer "the player whose back number is 11 in a soccer team B is Y".

When the user 10 is watching a channel guide or changing a channel, the voice recognition apparatus 100 may acquire information on a channel number 11 and output an answer "channel number 11 is a C broadcasting station, and a program D is being broadcast at present". Furthermore, when the user 10 is watching a music video or performance of a certain singer in a music program, the voice recognition apparatus 100 may acquire information on a track number 11 of a corresponding album of the singer and output an answer "Track number 11 is E. Do you want to listen to it?".

According to an embodiment, voice recognition may be performed based on content being executed, and an appropriate answer according to the voice recognition may be provided.

FIG. 16 is a diagram illustrating an example wherein the voice recognition apparatus 100 outputs an answer that varies according to context information.

Referring to FIG. 16, the user 10 asks a synopsis of content being executed. In general, since the user 10 will know the synopsis of a portion which the user 10 has watched, there is a high possibility that an intention of the user 10 is asking the contents of a portion which the user 10 has not watched. In this case, an existing voice recognition apparatus uniformly understands a question of the user 10, "I'm late a little. What was the story?" and outputs, as an answer, a total synopsis of the content being executed, "in the summer of 1998, a main character 'X' ...". Therefore, the user 10 should order again "no, only up to now from the portion I watched".

Compared with the existing voice recognition apparatus, the voice recognition apparatus 100 according to an embodiment may acquire only the contents after a time point where the user 10 watched using user characteristic information included in the context information 910 of the voice recognition apparatus 100 and output an answer suitable for an intention of the user 10, "a wedding ceremony of 'X' was performed".

According to an embodiment, the voice recognition apparatus 100 may quickly and conveniently output an answer suitable for an intention of the user 10.

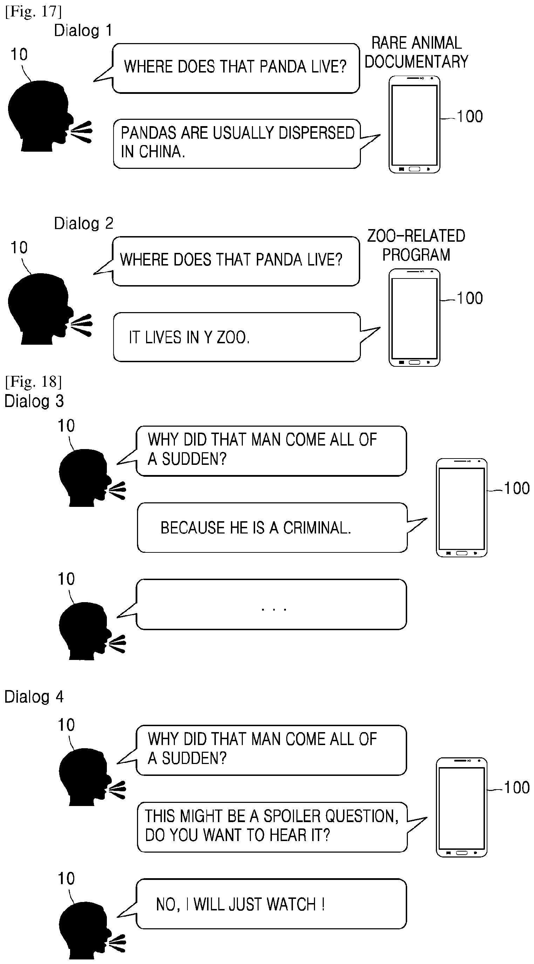

FIG. 17 is a diagram illustrating another example of outputting an answer that varies according to content being executed.

Referring to FIG. 17, the user 10 asks the same question in the middle of watching different pieces of content in situations of dialogs 1 and 2. In the situation of dialog 1, the user 10 is watching a rare animal documentary, and in the situation of dialog 2, the user 10 is watching a zoo-related program.

The voice recognition apparatus 100 according to an embodiment may output an answer that varies according to content being executed even when the voice recognition apparatus 100 receives the same question from the user 10. In the situation of dialog 1 in which the user 10 is watching the rare animal documentary, the voice recognition apparatus 100 may acquire information regarding a main habitat of pandas and output an answer "pandas are usually dispersed in China", according to content that is the rare animal documentary. In addition, in the situation of dialog 2 in which the user 10 is watching the zoo-related program, the voice recognition apparatus 100 may acquire information regarding a zoo in which pandas are raised, which is played at a time point where the user 10 is watching, and output an answer "it lives in a Y zoo", according to content that is the zoo-related program.

According to an embodiment, the voice recognition apparatus 100 may output an answer suitable for content being executed.

FIG. 18 is a diagram illustrating an example of determining relevance of an answer.

Referring to FIG. 18, the user 10 asks a question about a character in a situation in which the user 10 is watching a mystery film. In general, when watching a mystery film, the user 10 will not want to watch the mystery film after previously knowing a conclusion. Therefore, when an answer may be a spoiler since the answer contains information on a conclusion, the voice recognition apparatus 100 may interrupt movie watching of the user 10 by outputting the answer. In this case, the voice recognition apparatus 100 may appropriately correct the answer, or determine whether to output the answer after checking an intention of the user 10.

In a situation of dialog 3, an existing voice recognition apparatus uniformly understands a question of the user 10, "why did that man come all of a sudden?", and outputs an answer including information on a conclusion "because he is a criminal" regardless of a genre and a story of movie.

Compared with the existing voice recognition apparatus, the voice recognition apparatus 100 according to an embodiment may understand that an answer may be a spoiler since the answer contains information on a conclusion, based on content information in a situation of dialog 4, and output a relatively appropriate answer by checking the user 10 about whether to output the answer, through "this might be a spoiler question, do you want to hear it?".

According to an embodiment, the voice recognition apparatus 100 may determine relevance of an answer and output a best answer.

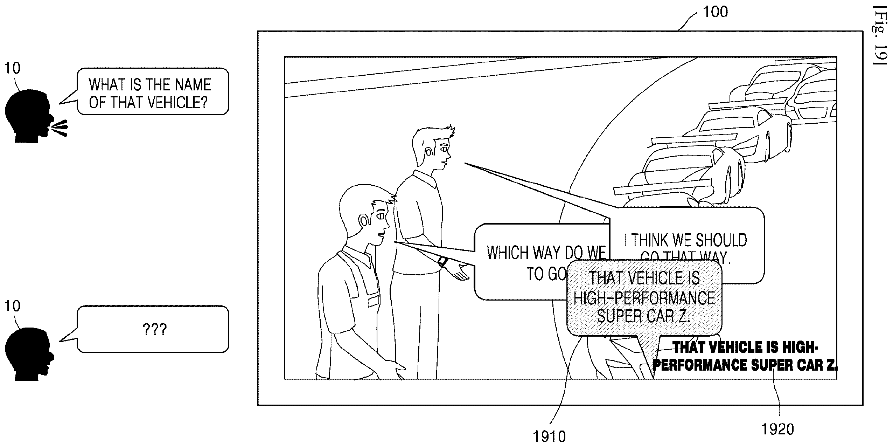

FIG. 19 is a diagram illustrating an example form of an answer output according to an embodiment.

Referring to FIG. 19, in a situation in which the user is watching movie, the user 10 asks a question about a name of a vehicle appearing in the movie. The voice recognition apparatus 100 may output an answer of an appropriate form in consideration of content information, context information of the voice recognition apparatus 100, and the like. For example, when the answer is output by a voice 1910 at a time point where characters in the movie are talking, the output answer overlaps the dialog in the movie, and thus, the user 10 cannot properly hear the answer, and the answer may rather interrupt the movie watching. Therefore, in this case, the answer may be output as subtitles 1920 instead of a voice.

According to an embodiment, the voice recognition apparatus 100 may output answer in an appropriate form according to content.

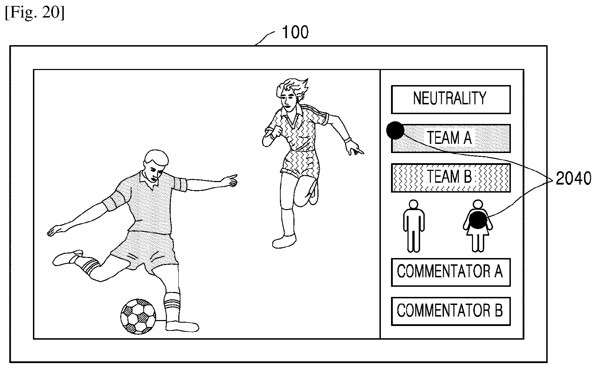

FIG. 20 is a diagram illustrating another example wherein the voice recognition apparatus 100 outputs an answer that varies according to context information according to an embodiment.

Referring to FIG. 20, the voice recognition apparatus 100 may generate a user-adaptive answer using user characteristic information included in the context information 910 of the voice recognition apparatus 100.

For example, when the user 10 is watching a soccer game, the voice recognition apparatus 100 may acquire information regarding a team which the user 10 supports, a preferred voice tone (preference according to gender), a preferred commentator, and the like. When the user 10 supports a team A and prefers a female voice tone, the voice recognition apparatus 100 may find out a commentary biased in favor of the team A and output the commentary with the female voice tone, according to user characteristic information. In addition, when the preferred commentator comments on the soccer game, the voice recognition apparatus 100 may find out and output a commentary of the preferred commentator.

According to an embodiment, the voice recognition apparatus 100 may output an answer in an appropriate form according to a user characteristic.

The embodiments described above can be written as computer-executable programs and can be implemented in general-use digital computers that execute the programs using a non-transitory computer-readable recording medium. In addition, a structure of data used in the embodiments described above can be recorded in a non-transitory computer-readable recording medium in various ways. In addition, the embodiments described above can be implemented in the form of a recording medium including computer-executable instructions such as computer-executable program modules. For example, methods implemented with a software module or an algorithm may be stored in a non-transitory computer-readable recording medium in the form of computer-readable codes or program instructions executable in a computer system.

A non-transitory computer-readable medium may be an arbitrary recording medium which may be accessed by a computer system and includes all types of volatile and nonvolatile media and separated and non-separated media. The non-transitory computer-readable medium may include a magnetic storage medium, e.g., ROM, a floppy disk, a hard disk, or the like, and an optical reading medium, e.g., a storage medium such as compact disk ROM (CD-ROM) or a digital versatile disc (DVD), but is not limited thereto. In addition, the non-transitory computer-readable medium may include a computer storage medium and a communication medium.

A plurality of non-transitory computer-readable recording media can also be distributed over a network coupled computer systems, and data stored in the distributed recording media, e.g., program instructions and codes, may be executed by at least one computer system.

Specific executions described in the present disclosure are illustrative and do not limit the scope of the present disclosure. For conciseness of the disclosure, disclosure of existing electronic configurations, control systems, software, and other functional aspects of the systems may be omitted.

It should be understood that the various example embodiments described herein should be considered in an illustrative sense only and not for purposes of limitation. Descriptions of features or aspects within each embodiment should typically be considered as available for other similar features or aspects in other embodiments.

While various example embodiments have been described with reference to the figures, it will be understood by those of ordinary skill in the art that various changes in form and details may be made therein. However, the scope is as defined by the following claims.

## Claims

1. An operation method of a voice recognition apparatus (100), the method comprising:
executing a video content;
receiving an audio signal during execution of the video content;
performing voice recognition on the audio signal;
acquiring content information of the video content being executed and context information of the voice recognition apparatus;
analyzing a user input based on the content information from a voice recognized by performing the voice recognition;
generating an answer based on the analyzed user input and the content information; and
outputting the answer,
wherein the generating of the answer comprises:
determining a relevance of the answer; and
correcting the answer based on the context information when it is determined that the answer is not appropriate,
wherein the context information includes information related to a location of the voice recognition apparatus, whether the voice recognition apparatus is connected to another electronic device, and the characteristics of a user who uses the voice recognition apparatus.

2. The method of claim 1, wherein the analyzing the user input based on the content information from the voice recognized by performing the voice recognition comprises performing natural language understanding of the recognized voice based on the content information.

3. The method of claim 2, wherein the performing the natural language understanding of the recognized voice based on the content information comprises:
performing the natural language understanding with respect to the recognized voice; and
correcting the natural language understanding with respect to the recognized voice based on the content information.

4. The method of claim 1, wherein the determining of the relevance of the answer comprises determining universal relevance and/or user relevance of the answer.

5. The method of claim 1, wherein the analyzing the user input based on the content information from the voice recognized by performing the voice recognition comprises analyzing the user input based on the context information.

6. The method of claim 1, wherein the outputting the answer comprises determining an output form of the answer based on the content information and/or the context information.

7. A voice recognition apparatus (100) comprising:
a receiver (1310) comprising receiving circuitry configured to receive an audio signal;
at least one processor (1320) configured to:
execute a video content;
perform voice recognition on the audio signal during execution of the video content;
acquire content information of the video content being executed and context information of the voice recognition apparatus;
analyze a user input based on the content information from a voice recognized by performing the voice recognition, and
generate an answer based on the analyzed user input and the content information;
determine a relevance of the answer; and
correct the answer based on the context information when it is determined that the answer is not appropriate,
wherein the context information includes information related to a location of the voice recognition apparatus, whether the voice recognition apparatus is connected to another electronic device, and the characteristics of a user who uses the voice recognition apparatus, and
an output unit (1330) comprising:
output circuitry configured to output the answer,
a display configured to output a text or an image, and
a sound output unit configured to output a sound.

8. The voice recognition apparatus (100) of claim 7, wherein the at least one processor (1320) is configured to perform natural language understanding of the recognized voice based on the content information.

9. The voice recognition apparatus (100) of claim 7, wherein the at least one processor (1320) is configured to perform natural language understanding of the recognized voice and to correct, based on the content information, the natural language understanding of the recognized voice.

10. The voice recognition apparatus (100) of claim 7, further comprising:
a detector comprising detecting circuitry configured to detect external information,
wherein the at least one processor (1320) is configured to acquire context information related to a situation in which the voice recognition apparatus operates, and to generate the answer based on the context information.

## Patentansprüche

1. Betriebsverfahren für eine Spracherkennungsvorrichtung (100), wobei das Verfahren umfasst:
Ausführen eines Videoinhalts;
Empfangen eines Audiosignals während der Ausführung des Videoinhalts;
Durchführen der Spracherkennung an dem Audiosignal;
Erfassen von Inhaltsinformationen des ausgeführten Videoinhalts und von Kontextinformationen der Spracherkennungsvorrichtung;
Analysieren einer Benutzereingabe auf der Grundlage der Inhaltsinformationen einer Stimme, die durch die Durchführung der Spracherkennung erkannt wurde;
Erzeugen einer Antwort auf der Grundlage der analysierten Benutzereingabe und der Inhaltsinformationen; und
Ausgeben der Antwort,
wobei das Erzeugen der Antwort umfasst:
Bestimmen der Relevanz der Antwort; und
Korrigieren der Antwort auf der Grundlage der Kontextinformationen, wenn bestimmt wird, dass die Antwort nicht angemessen ist,
wobei die Kontextinformationen Informationen enthalten, die sich auf einen Standort der Spracherkennungsvorrichtung, darauf, ob die Spracherkennungsvorrichtung mit einer anderen elektronischen Vorrichtung verbunden ist, und auf die Eigenschaften eines Benutzers, der die Spracherkennungsvorrichtung verwendet, beziehen.

2. Verfahren nach Anspruch 1, wobei das Analysieren der Benutzereingabe auf der Grundlage der Inhaltsinformationen der durch das Durchführen der Spracherkennung erkannten Stimme das Durchführen eines natürlichen Sprachverständnisses der erkannten Stimme auf der Grundlage der Inhaltsinformationen umfasst.

3. Verfahren nach Anspruch 2, wobei das Durchführen des natürlichen Sprachverständnisses der erkannten Stimme auf der Grundlage der Inhaltsinformationen umfasst:
Durchführen des natürlichen Sprachverständnisses in Bezug auf die erkannte Stimme; und
Korrigieren des natürlichen Sprachverständnisses in Bezug auf die erkannte Stimme auf der Grundlage der Inhaltsinformationen.

4. Verfahren nach Anspruch 1, wobei das Bestimmen der Relevanz der Antwort das Bestimmen der universellen Relevanz und/oder der Benutzerrelevanz der Antwort umfasst.

5. Verfahren nach Anspruch 1, wobei das Analysieren der Benutzereingabe auf der Grundlage der Inhaltsinformationen der durch die Durchführung der Spracherkennung erkannten Stimme das Analysieren der Benutzereingabe auf der Grundlage der Kontextinformationen umfasst.

6. Verfahren nach Anspruch 1, wobei das Ausgeben der Antwort das Bestimmen einer Ausgabeform der Antwort auf der Grundlage der Inhaltsinformationen und/oder der Kontextinformationen umfasst.

7. Spracherkennungsvorrichtung (100), die Folgendes umfasst:
einen Empfänger (1310), der eine Empfangsschaltung umfasst, die zum Empfangen eines Audiosignals konfiguriert ist;
mindestens einen Prozessor (1320), der konfiguriert ist, um:
einen Videoinhalt auszuführen;
während der Ausführung des Videoinhalts eine Spracherkennung an dem Audiosignal durchzuführen;
Inhaltsinformationen des ausgeführten Videoinhalts und Kontextinformationen der Spracherkennungsvorrichtung zu erfassen;
eine Benutzereingabe auf der Grundlage der Inhaltsinformationen einer durch die Durchführung der Spracherkennung erkannten Stimme zu analysieren, und
eine Antwort auf der Grundlage der analysierten Benutzereingabe und der Inhaltsinformationen zu erzeugen;
die Relevanz der Antwort zu bestimmen; und
die Antwort anhand der Kontextinformationen zu korrigieren, wenn bestimmt wird, dass die Antwort nicht angemessen ist,
wobei die Kontextinformationen Informationen enthalten, die sich auf einen Standort der Spracherkennungsvorrichtung, darauf, ob die Spracherkennungsvorrichtung mit einer anderen elektronischen Vorrichtung verbunden ist, und auf die Eigenschaften eines Benutzers, der die Spracherkennungsvorrichtung verwendet, beziehen, und
eine Ausgabeeinheit (1330), die Folgendes umfasst:
eine Ausgabeschaltung, die zum Ausgeben der Antwort konfiguriert ist,
eine Anzeige, die zum Ausgeben eines Textes oder eines Bildes konfiguriert ist, und
eine Tonausgabeeinheit, die zum Ausgeben eines Tons konfiguriert ist.

8. Spracherkennungsvorrichtung (100) nach Anspruch 7, wobei der mindestens eine Prozessor (1320) konfiguriert ist, um ein natürliches Sprachverständnis der erkannten Stimme auf der Grundlage der Inhaltsinformationen durchzuführen.

9. Spracherkennungsvorrichtung (100) nach Anspruch 7, wobei der mindestens eine Prozessor (1320) konfiguriert ist, um das natürliche Sprachverständnis der erkannten Stimme durchzuführen und das natürliche Sprachverständnis der erkannten Stimme auf der Grundlage der Inhaltsinformationen zu korrigieren.

10. Spracherkennungsvorrichtung (100) nach Anspruch 7, die ferner umfasst:
einen Detektor, der eine Erfassungsschaltung umfasst, die zum Erfassen externer Informationen konfiguriert ist,
wobei der mindestens eine Prozessor (1320) konfiguriert ist, um Kontextinformationen zu erfassen, die sich auf eine Situation beziehen, in der die Spracherkennungsvorrichtung arbeitet, und um die Antwort auf der Grundlage der Kontextinformationen zu erzeugen.

## Revendications

1. Procédé de fonctionnement d'un dispositif de reconnaissance vocale (100), comprenant :
exécuter un contenu vidéo ;
recevoir un signal audio pendant l'exécution du contenu vidéo ;
effectuer une reconnaissance vocale sur le signal audio ;
acquérir des informations de contenu du contenu vidéo en cours d'exécution et des informations de contexte du dispositif de reconnaissance vocale ;
analyser une entrée utilisateur basée sur les informations de contenu d'une voix reconnue en effectuant la reconnaissance vocale ;
générer une réponse sur la base de l'entrée utilisateur analysée et des informations de contenu ; et
sortir la réponse,
dans lequel la génération de la réponse comprend :
déterminer la pertinence de la réponse ; et
corriger la réponse sur la base des informations de contexte lorsqu'il est établi que la réponse n'est pas appropriée,
dans lequel les informations de contexte comprennent des informations relatives à un emplacement du dispositif de reconnaissance vocale, à la connexion ou non du dispositif de reconnaissance vocale à un autre dispositif électronique et aux caractéristiques d'un utilisateur qui utilise le dispositif de reconnaissance vocale.

2. Procédé de la revendication 1, dans lequel l'analyse de l'entrée utilisateur sur la base des informations de contenu de la voix reconnue en effectuant la reconnaissance vocale comprend l'exécution de la compréhension de langage naturel de la voix reconnue sur la base des informations de contenu.

3. Procédé de la revendication 2, dans lequel l'exécution de la compréhension de langage naturel de la voix reconnue sur la base des informations de contenu comprend :
effectuer la compréhension de langage naturel par rapport à la voix reconnue ; et
corriger la compréhension de langage naturel par rapport à la voix reconnue sur la base des informations de contenu.

4. Procédé de la revendication 1, dans lequel la détermination de la pertinence de la réponse comprend la détermination de la pertinence universelle et/ou de la pertinence d'utilisateur de la réponse.

5. Procédé de la revendication 1, dans lequel l'analyse de l'entrée utilisateur sur la base des informations de contenu de la voix reconnue en effectuant la reconnaissance vocale comprend l'analyse de l'entrée utilisateur sur la base des informations de contexte.

6. Procédé de la revendication 1, dans lequel la sortie de la réponse comprend la détermination d'une forme de sortie de la réponse sur la base des informations de contenu et/ou des informations de contexte.

7. Dispositif de reconnaissance vocale (100), comprenant :
un récepteur (1310) comprenant un circuit de réception configuré pour recevoir un signal audio ;
au moins un processeur (1320) configuré pour :
exécuter un contenu vidéo ;
effectuer une reconnaissance vocale sur le signal audio pendant l'exécution du contenu vidéo ;
acquérir des informations de contenu du contenu vidéo en cours d'exécution et des informations de contexte du dispositif de reconnaissance vocale ;
analyser une entrée utilisateur sur la base des informations de contenu d'une voix reconnue en effectuant la reconnaissance vocale, et
générer une réponse sur la base de l'analyse de l'entrée utilisateur et des informations de contenu ;
déterminer la pertinence de la réponse ; et
corriger la réponse sur la base des informations de contexte lorsqu'il est établi que la réponse n'est pas appropriée,
dans lequel les informations de contexte comprennent des informations relatives à l'emplacement du dispositif de reconnaissance vocale, à la connexion ou non du dispositif de reconnaissance vocale à un autre dispositif électronique et aux caractéristiques d'un utilisateur qui utilise le dispositif de reconnaissance vocale, et
une unité de sortie (1330) comprenant
un circuit de sortie configuré pour sortir la réponse,
un affichage configuré pour sortir un texte ou une image, et
une unité de sortie sonore configurée pour émettre un son.

8. Dispositif de reconnaissance vocale (100) de la revendication 7, dans lequel l'au moins un processeur (1320) est configuré pour effectuer une compréhension de langage naturel de la voix reconnue sur la base des informations de contenu.

9. Dispositif de reconnaissance vocale (100) de la revendication 7, dans lequel l'au moins un processeur (1320) est configuré pour effectuer la compréhension de langage naturel de la voix reconnue et pour corriger, sur la base des informations de contenu, la compréhension de langage naturel de la voix reconnue.

10. Dispositif de reconnaissance vocale (100) de la revendication 7, comprenant en outre :
un détecteur comprenant un circuit de détection configuré pour détecter des informations externes,
dans lequel l'au moins un processeur (1320) est configuré pour acquérir des informations de contexte liées à une situation dans laquelle le dispositif de reconnaissance vocale fonctionne, et pour générer la réponse sur la base des informations de contexte.
